# EUROPEAN PATENT SPECIFICATION

(11) **EP 0 947 177 B1**
(45) Date of publication and mention of the grant of the patent: **08.03.2006**
(21) Application number: 99106767.9
(22) Date of filing: 06.04.1999
(51) Int. Cl.: A61C 7/00

(54) **Orthodontic anchor appliance**
Orthodontische Verankerungsvorrichtung
Dispositif d'ancrage orthodontique

(30) Priority: 02.04.1998 US 54208; 04.02.1999 US 245162
(43) Date of publication of application: 06.10.1999
(73) Proprietor: De Vincenzo, John, San Luis Obispo, California 93401 (US)
(72) Inventor: De Vincenzo, John, San Luis Obispo, California 93401 (US)
(74) Representative: Gee, Steven William

(56) References cited:
- WO-A-96/19946
- US-A- 1 415 414
- US-A- 5 007 828
- US-A- 5 022 855
- US-A- 5 035 614
- US-A- 5 071 345
- US-A- 5 399 087
- US-A- 5 505 616
- US-A- 5 853 291

## Description

This invention relates generally to an orthodontic anchor appliance and is particularly concerned with a device which can be attached to a fixed subperiosteal or intrabony anchor and from which forces can be generated to move teeth and correct malocclusions.

The use of fixed, immovable bony anchors as rigid objects from which to exert forces to move teeth has been considered in orthodontics for more than twenty years. See, for example, Sherman, A.J., "Bone reaction to orthodontic forces on vitreous carbon dental implants", and Smith, J.R., "Bone dynamics associated with the controlled loading of bioglass-coated aluminum oxide endosteal implants", American Journal of Orthodontics, vol. 76, p.618, 1979. These early studies used animal models, and it was not until 1983 that their use was demonstrated in clinical orthodontics. See Creekmore, T.A. and Eklund, M.K., "The possibility of skeletal anchorage", Journal of Clinical Orthodontics, vol. 17, p.266, 1983. Thereafter additional reports of the use of a bony anchor from which to exert forces to move teeth have appeared see, for example, Turley, P.K., Gray, D.W., Kean, L.J. and Roberts, E.W., "Titanium endosseous and vitallium subperiosteal implants as orthodontic anchors for tooth movement in dogs", Journal of Dental Research, vol. 63A, p.334, 1984, and Goodacre, C.J., "Rigid implant anchorage to close a mandibular first molar extraction site, Journal of Clinical Orthodontics, vol. 18, p.693, 1994. More recently, interest has shifted to subperiosteal anchors as described by Block and Hoffman in US Patents Nos 5 066 224 and 5 538 427, the article "A new device for absolute anchorage for orthodontics", Journal of Orthodontics and Dentofacial Orthopedics, vol. 107, p.251, 1995 and in application of Devincenzo, Application No. 08/948,731, filed October 20, 1997. See also Kanomi, R., "Mini-implant for Orthodontic Anchorage", Journal of Clinical Orthodontics, vol. 31, pp. 763-767, 1997 and Sachdeva, et al, US Patent 5 697 779.

All of the above mentioned anchor systems utilize either endosseous or subperiosteal placement and afford rigid, immovable objects from which teeth can be moved forward, backward, upward, downward and sideways. However, the surgical placement of these anchors in certain areas of the mouth is frequently very difficult because of limited access, thinness of the overlying soft tissue, irritations caused during routine oral functions, and the presence of nearby roots, nerves and blood vessels. Additionally, the means of attaching to these anchors is technically difficult and complicated mechanical objects are required to facilitate tooth movement and orthodontic corrections.

It is technically difficult to work in the back and roof of the mouth but the overlying tissue is thick. It is easy to work on the sides of the mouth opposite the upper teeth, but the overlying tissue is thin and irritation from the anchors and the presence of the roots of the teeth limit use in these areas. Right at the midline of the maxilla and mandible surgical access, tissue thickness and minimal irritation are present.

WO 96/19946 discloses an orthodontic appliance for moving teeth in a desired direction, and discloses the use of a single bony anchor for fixing in the oral cavity of a patient, an arch shaped wire fixed to the bony anchor shaped for extending bucally of the maxillary teeth and constituting a buccal arch, and resilient means for exerting forces between said buccal arch and at least one tooth of the patient.

The embodiment of the present invention is disclosed in claim 1.

This invention can be adapted to any bony anchor system. Only a single anchor is needed and said anchor is placed in the front of the mouth and between the roots of the maxillary or mandibular central incisors. Onto an anchor head, an attachment is placed which stabilizes a rigid, heavy buccal wire. This wire in effect extends the influence of the anchor curvilinearly. Various attachments can be placed on this wire and from these attachments; forces can be generated to move teeth.

Embodiments of the invention will now be described, by way of example, with reference to the accompanying drawings in which:
FIG. 1 is a side perspective view of the Bony Anchor Extender (BAE) showing the connector and a configuration for the head of the bony anchor while an intrusive force is being delivered to the posterior teeth from the BAE;
FIG. 2 is a front perspective of the present invention showing a distalizing force on the left molar while a mesializing force is being applied to the right molar because of missing teeth while an intrusion force is being applied to the central incisors;
FIG.3 is a schematic representation of the connector assembly;
FIG 4. is an enlarged front view of the connector assembly;
FIGS. 5a-5f illustrate the various configurations of the bony anchor head element;
FIGS. 6a and 6b illustrate a means of attaching the connector to the head of the bony anchor;
FIG. 7 shows a means of connecting the midportion of the connector assembly to the BAE;
FIG. 8 depicts an adjustable screw clamp to attach the BAE to the connector assembly;
FIGS. 9a and 9b show a modification of the BAE at its midportion so as to fit an angular portion of the connector assembly;
FIGS. 10a-10e show various attachments which can be placed on the BAE.
FIG. 11 is a side elevational view of a buccal arch made in accordance with another embodiment of the present invention, and showing its attachment to a bony anchor in the front of the mouth and being used in a way that will permit a force to be applied to the molar tooth to move it distally;
FIG. 12 is a frontal perspective view of the device shown in Fig 11 showing the distalizing force of Fig 1 on the left molar while a mesializing force is being applied to the right molar because of missing teeth, and intrusion forces are being applied to the central incisors and the left cuspid while an extensive force is present on the right lateral;
FIG. 13 is an enlarged side elevational view of the anchor shown in Fig. 11 showing the connector assembly more clearly; and
FIG.14 is an enlarged front elevational view of the structure shown in Fig. 12.

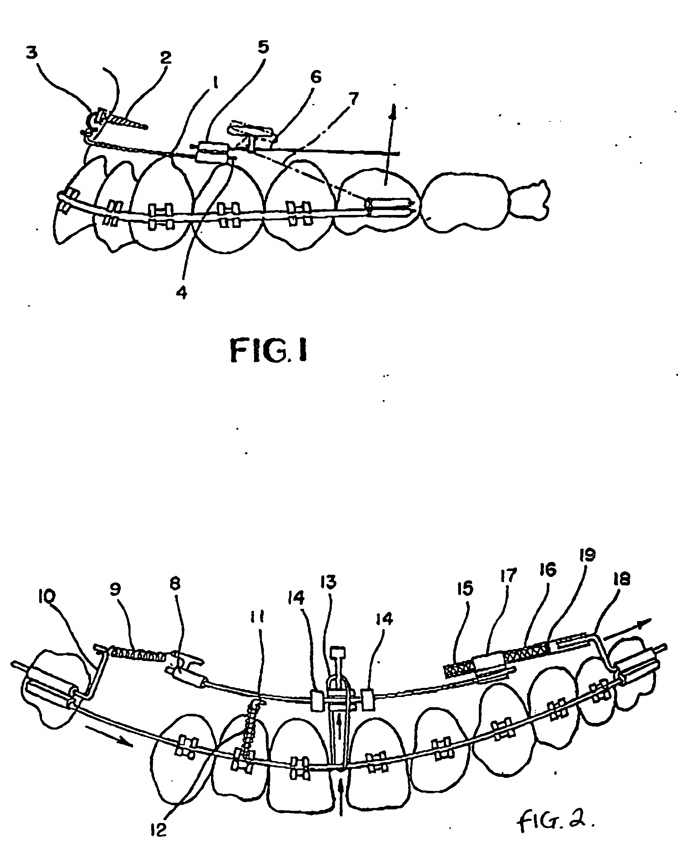

Referring first to Figures 1 to 10e, and more particularly to Figure I thereof, a bony anchor extender (BAE) 1 is attached to bony anchor 2 by a connector assembly 3. As the BAE extends distally it terminates as a free end 4. At any point along the BAE, attachments 5 can be placed and secured. From these attachments three dimensional movement of teeth or a tooth can be accomplished. In Figure 1, an intrusive force is generated on the maxillary molar and to a lesser extent other posterior teeth by a wire shown in resting 6 and activated 7 (shown in dotted lines) states. Note that there is no equal and opposite effect on the anterior teeth.

In Figure 2, the right molar is mesialized by attachment 8 at the distal of the BAE. A closed coil spring 9 hooks onto a vertically extending wire 10 which encourages translational movement to the first molar. A vertical attachment 11 and open coil spring 12 can selectively extrude one or more teeth while the elastic thread 13 intrudes the maxillary centrals. Stops 14 on the BAE and on each side of the connector stabilize the connector. The left molar is distalized by open coil spring 15 encased in a cylinder 16 which is attached to the BAE 1. A wire extension 18 attached to the molar is pressed upon by sliding plunger 19 of the distalizing cylinder/spring assembly 15, 16, 19.

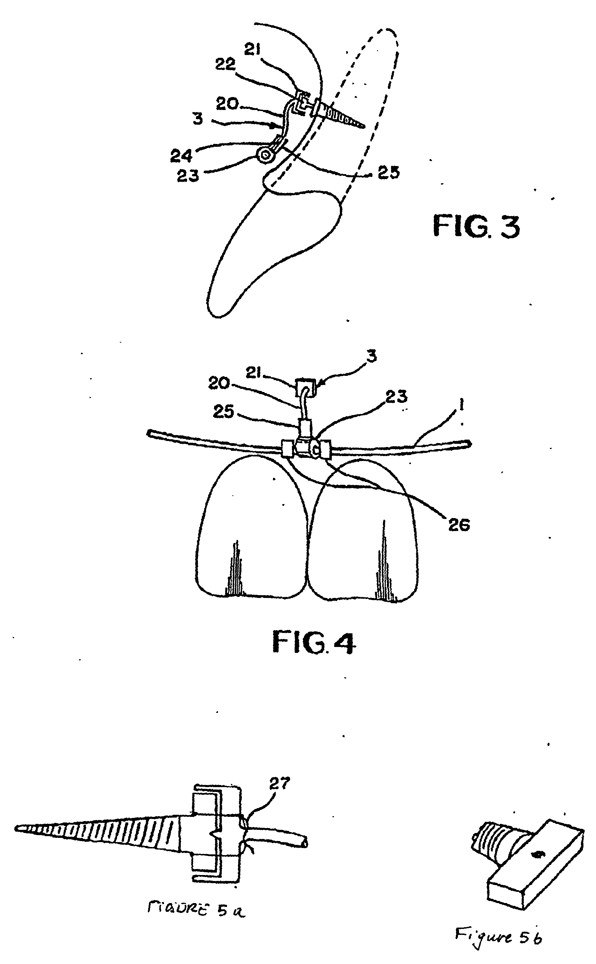

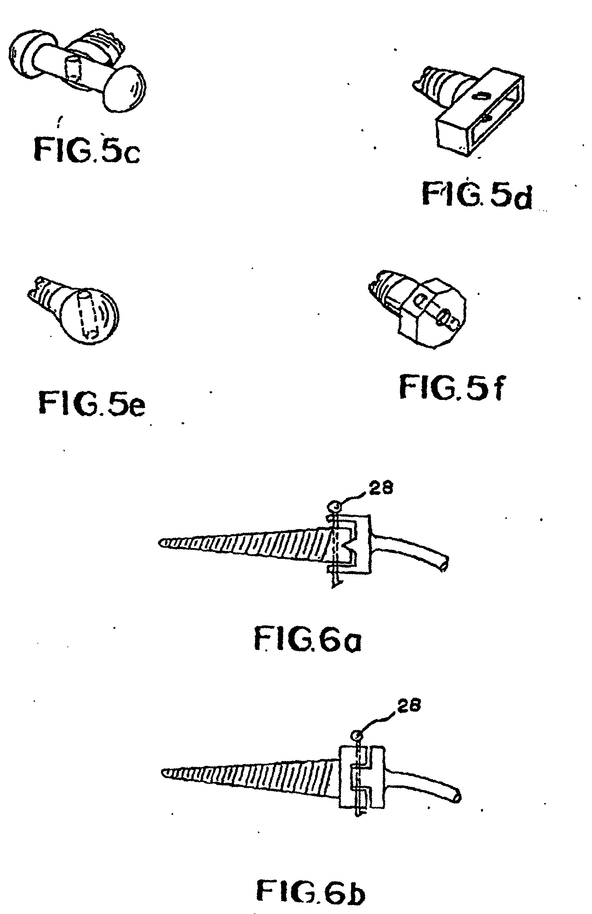

Figure 3 is an enlargement of Figure 1 to better illustrate connector assembly 3 which consists of three components, the midportion 20, the attachment 21 to the bony anchor head 22, and the attachment <23> to the BAE. Note in this illustration that the midportion 20 fits into the attachment <23> to the BAE as illustrated at 24. The extended cylinder <25> of the attachment 23 can be pressed firmly around the midportion 20 that fits into the BAE attachment 23. Then the entire BAE and attachment can be removed and either spot welded, soldered or stabilized in other ways so as to obtain a firm three dimensional configuration which can then be reinserted onto bony anchor head 22 and fixed by either a ligature wire or drop pin as illustrated in Figure 6.

Figure 4 is a frontal view of the connector assembly. The attachment to the bony anchor 21, the midportion 20 and the attachment <23> to the BAE are clearly visible. The way the connector fits into the vertical cylinder 25 of the BAE attachment 23 can be seen. Stops 26 on each side of BAE attachment 23 help stabilize the attachment assembly 3 onto BAE 1.

In Figures 5a-5f a variety of heads are illustrated which can either be placed on any bony anchor or be made an integral part thereof. More specifically, an angular head is shown in Figure 5a, a solid wedge with flush ends is shown in Figure 5b, an enclosed wedge with rounded ends is shown in Figure 5c, an open rectangular box is shown in Figure 5d, a spherical head is shown in Figure 5e and an octagonal head is shown in Figure 5f.

The connector assemblies are attachable to the bony anchor heads in Figures 5a-5e by ligature wire 27, as shown in Figure 5a, or by drop pin 28, as shown in Figures 6a and 6b.

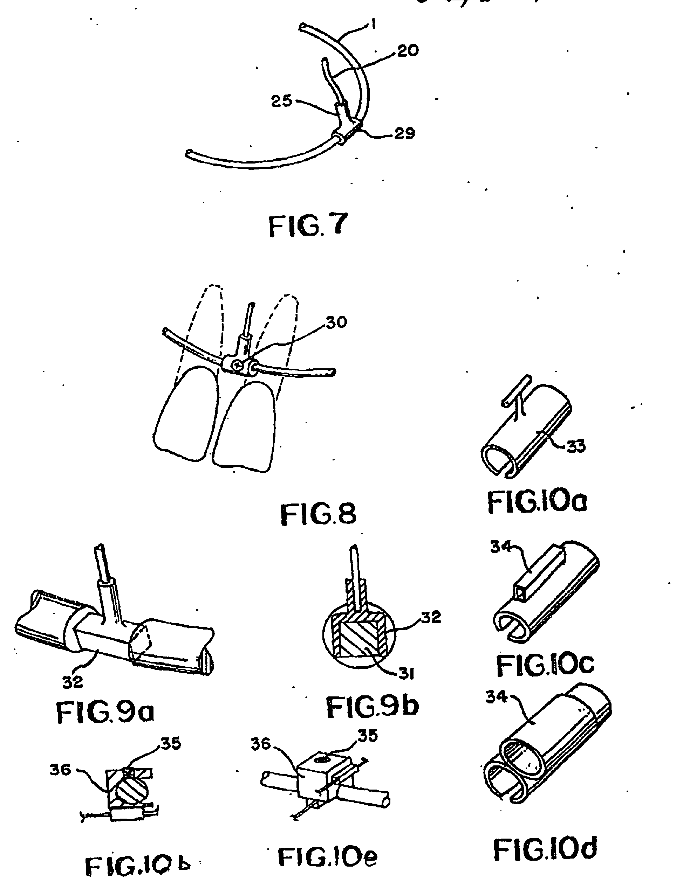

Figure 7 illustrates a means of attaching the BAE to the bony anchor. A hollow T shaped crimpable cylinder 29 is placed onto BAE 1 and positioned by rotation and lateral movement to just that location where the midportion of the connector 20 can fit inside the vertical cylinder 25. Crimpable vertical cylinder 25 is then crimped along with the crimping of the other members of the T thereby securing the midportion in place. Thereafter BAE 1 and the connector assembly are removed from the mouth and these crimped portions of the hollow T shaped portion 29 are welded, soldered or secured in place by other means.

Figure 8 is another means of making the connector attachment in which a screw clamp 30 is substituted for the crimpable aspects of hollow fitting 29 on the BAE.

Figures 9a and 9b show another embodiment of the BAE in which center portion 31 is generally rectangular and cap 32 envelops portion 31 at the BAE end of the attachment mechanism.

In Figures 10a-10e, a number of designs of the attachment which is placed on the BAE are depicted. Specifically shown is the crimpable nature of portion 33 which goes over the BAE and piggyback attachments 34 which are connected to the crimpable portion 33. Figures 10b and 10e show a piggyback tube or cylinder which is stabilized by means of locking screw 35 or clamp 36.

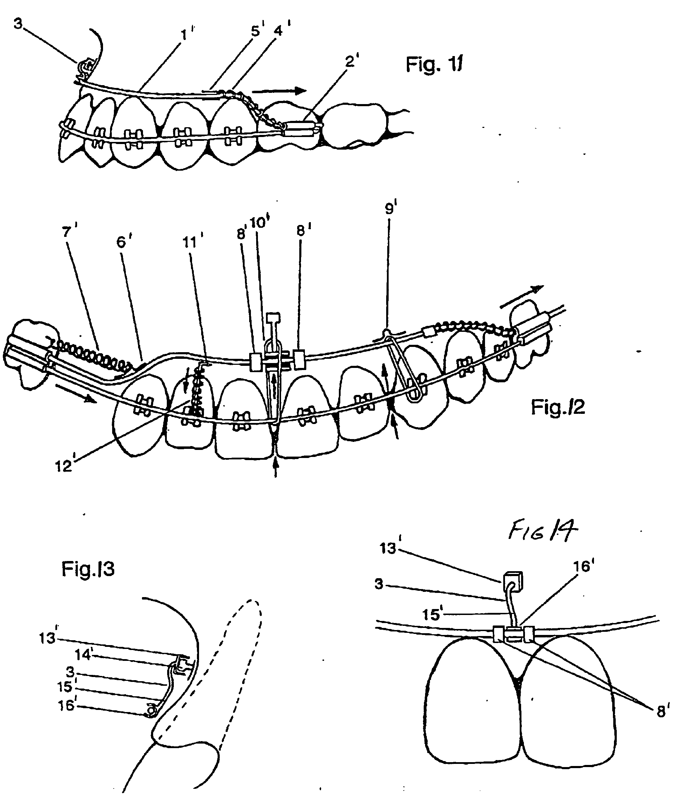

Referring now more particularly to the Figures 11 to 14 of the drawings, and to that embodiment of the invention here chosen by way of illustration, in Figure 11 the buccal arch 1¹ is stabilized distally by insertion into the molar tube 2¹, while mesially it is held rigidly in place by the connector assembly 3 which is fixed to a bony anchor. A length of open wound spring 4¹ is threaded over the buccal arch 1 from the distal end, and is prevented from moving mesially by stop 5¹ on the buccal arch. The spring 4¹ thus exerts a distalizing force on the molar.

By modifying the shape of the buccal arch 1¹, as is well known by those in the practice of orthodontics, it can be used to exert a mesializing force on the molar as shown in Figure 12. Herein an attachment 6¹ is placed on the buccal arch 1¹, and from the attachment 6 a force, such as that delivered by a closed coil spring 7¹, will produce the desired movement. Stops 8¹' on the buccal arch 1¹ will prevent migration of the buccal arch 1¹ from the forces applied through it. Tying directly to the buccal arch 1¹, or through an attachment 9¹ placed on it, will permit an intrusive force to be delivered to a tooth or teeth. A similar intrusive force is illustrated as being applied between the two centrals by way of an elastic thread 10¹. By attaching a vertical wire 11¹ from the buccal arch 1¹ extending towards the incisal (or occlusal) an open coil spring 12¹ could be placed on this vertical wire to extrude one or more teeth.

A connector assembly 3¹ comprises three components (Figures 13 and 14). The angular cap 13¹ fits snugly over an angular shaft head 14¹ which protrudes from the body of the anchor. An adjustable connecting wire 15¹ can be bent or otherwise adjusted to fit the individual patient. In the region of the receptacle, the buccal arch 1¹ may be angular (shown as round in Figure 13) so it will fit more rigidly into the receptacle so as to create moments across the buccal arch to potentially intrude molars. To those familiar with the art of orthodontics, bending the buccal arch 1¹ apically in its posterior regions, ie. giving it a curve of Spee, will effectively intrude those teeth, if the receptacle 16¹ and the buccal arch 1¹ in that region are both angular.

To those skilled in the art of orthodontics a further application of the buccal arch 1¹ to facilitate movement of the mandibular dentition will immediately come to mind. By using the buccal arch 1¹ as a stabilizing mechanism and not as an active tooth moving device, interarch forces can be delivered to the mandibular dentition. This would effectively serve as one or more mandibular bony anchors. Thus the mandibular dentition could be moved at will, utilizing forces generated from a single bony anchor provided at the midline of the maxillary central incisors.

While the details of the attachments and stops, such as attachment 9' and stop 8', are not shown, those skilled in the art are accustomed to fixing such apparatus to an arch wire or other appliance. The requirements for use of the present invention will therefore be well understood from the disclosure provided herein:

It will of course be understood by those skilled in the art that the particular embodiments of the invention here presented is by way of illustration only, and is meant to be in no way restrictive, thus, numerous changes and modifications may be made, and the full use of the equivalents resorted to, without departing from the scope of the invention as outlined in the appended claims.

## Claims

1. An orthodontic appliance for moving teeth in a desired direction, said appliance comprising, in combination, a single bony anchor (2) for fixing at the front of the oral cavity of a patient, an arch shaped wire (1') fixed to said bony anchor by a connector (3), said arch shaped wire being shaped for extending buccally of the maxillary teeth and constituting a buccal arch, and resilient means (4', 7', 12', 13) for exerting a force between said buccal arch and at least one tooth of a patient, **characterised in that** the appliance has at least one molar tube receiving an end of said buccal arch for stabilizing said buccal arch, and **in that** said connector includes an adjustable connecting wire (20, 15') having a first end fixed to said bony anchor, and a second end fixed to said arch shaped wire.

2. An orthodontic appliance as claimed in claim 1, and further including a pair of stops (8) on said arch shaped wire, one stop of said pair of stops being at each side of the connection between the second end of the adjustable connecting wire (20, 15) and the arch shaped wire (1), for stabilizing the arch shaped wire with respect to said anchor.

3. An orthodontic appliance as claimed in claim 1 or claim 2, wherein said resilient means comprises a coil spring (4) surrounding said arch shaped wire, and including a stop (5) fixed to said arch shaped wire, said coil spring abutting said stop and said molar tube.

4. An orthodontic appliance as claimed in claim 1 or claim 2, wherein said resilient means comprises a coil spring (12), and further including an attachment (11) fixed to said arch shaped wire, said coil spring being arranged to exert a force between said attachment and a tooth of the patient.

5. An orthodontic appliance as claimed in claim 1 or claim 2, wherein said resilient means comprises an elastic extending over said buccal arch for exerting forces on teeth.

6. An orthodontic appliance as claimed in any of claims 1-5, having a connector comprising a female receptacle for receiving said bony anchor, the adjustable connecting wire (20, 15') fixed by its first end to said receptacle and extending therefrom, and a second receptacle fixed to the second end of the adjustable connecting wire for receiving said arch shaped wire (1)

## Revendications

1. Un appareil d'orthodontie qui permet de faire bouger les dents dans le sens souhaité, qui comprend, conjointement, une seule attache osseuse (2) pour fixer sur la partie frontale de la cavité buccale du patient, un fil métallique en forme d'arc (1') fixé à ladite attache osseuse au moyen d'un connecteur (3), ledit fil métallique en forme d'arc pouvant s'étendre dans la bouche, sur les dents maxillaires pour former un arc buccal, et des moyens résilients (4', 7', 12', 13) pour exercer une force entre le suscité arc buccal et au moins une dent du patient, **caractérisé en ce que** l'appareil possède au moins un tube molaire qui reçoit l'une des extrémités dudit arc afin de le stabiliser, et **en ce que** ledit connecteur comprend un fil métallique de connexion ajustable (20, 15') dont la première extrémité est fixé à ladite attache osseuse, et dont la deuxième extrémité est fixé audit fil métallique en forme d'arc.

2. Un appareil d'orthodontie d'après la revendication 1, et qui en plus comprend une paire de butées (8) sur ledit fil métallique en forme d'arc, chacune des butées qui composent la paire se trouvant de chaque côté de la connexion entre la deuxième extrémité du fil métallique de connexion ajustable (20, 15') et le fil en forme d'arc (1') , pour stabiliser le fil métallique en forme d'arc par rapport à cette attache.

3. Un appareil d'orthodontie d'après la revendication 1 ou la revendication 2, dans lequel les moyens résilients suscités comprennent un ressort hélicoïdal (4) qui entoure ledit fil métallique en forme d'arc, et qui comprend une butée (5') fixée audit fil métallique en forme d'arc, ledit ressort hélicoïdal servant d'appui à ladite butée et audit tube molaire.

4. Un appareil d'orthodontie d'après la revendication 1 ou la revendication 2, où lesdits moyens résilients comprennent un ressort hélicoïdal (12), et qui en plus comprennent un accessoire de maintient (11) fixé sur ledit fil métallique en forme d'arc, ledit ressort hélicoïdal étant placé de façon à exercer une force entre cet accessoire de maintient et une dent du patient.

5. Un appareil d'orthodontie d'après la revendication 1 ou la revendication 2, dans lequel lesdits moyens résilients comprennent un élastique qui s'étire le long de l'arc buccal précédemment cité, afin d'exercer des forces sur les dents.

6. Un appareil d'orthodontie d'après n'importe laquelle des revendications 1-5, qui possède un connecteur qui comprend un réceptacle femelle pour recevoir l'attache osseuse précédemment citée, le fil métallique de connexion ajustable (20, 15') fixé par sa première extrémité audit réceptacle et qui s'étire à partir de celui-ci, et un second réceptacle fixé à la deuxième extrémité du fil métallique de connexion ajustable, pour recevoir ledit fil métallique en forme d'arc (1') .

## Patentansprüche

1. Eine orthodontische Vorrichtung zur Bewegung von Zähnen in eine gewünschte Richtung, wobei diese Vorrichtung kumulativ umfasst: eine einfache Knochen-Verankerung (2) zur Befestigung an der Vorderseite der Mundhöhle eines Patienten, einen bogenförmigen Draht (1'), der über ein Verbindungsglied (3) mit dieser Knochen-Verankerung verbunden ist, wobei dieser bogenförmige Draht so gestaltet ist, um sich bukkal an den maxillaren Zähnen entlang zu erstrecken und einen bukkalen Bogen zu bilden, und Federvorrichtungen (4', 7', 12', 13) zur Ausübung einer Kraft zwischen diesem bukkalen Bogen und mindestens einem Zahn des Patienten, **dadurch gekennzeichnet, dass** die Vorrichtung mindestens eine molare Röhre besitzt, die ein Ende dieses bukkalen Bogens zur Stabilisierung dieses bukkalen Bogens aufnimmt und **dadurch**, dass dieses Verbindungsglied einen regulierbaren Verbindungsdraht (20, 15') einschließt, der ein erstes an dieser Knochen-Verankerung befestigtes Ende und ein zweites an diesem bogenförmigen Draht befestigtes Ende besitzt.

2. Eine orthodontische Vorrichtung nach Anspruch 1, die ferner ein Paar Stoppvorrichtungen (8) auf diesem bogenförmigen Draht einschließt, wobei sich eine Stoppvorrichtung dieses Paars Stoppvorrichtungen auf jeder Seite der Verbindung zwischen dem zweiten Ende des regulierbaren Verbindungsdrahtes (20, 15') und dem bogenförmigen Draht (1') befindet, zur Stabilisierung des bogenförmigen Drahtes hinsichtlich dieser Verankerung.

3. Eine orthodontische Vorrichtung nach Anspruch 1 oder Anspruch 2, wobei besagte Federvorrichtung eine Schraubenfeder (4') umfasst, die diesen bogenförmigen Draht umgibt und eine Stoppvorrichtung (5') einschließt, die an diesem bogenförmigen Draht befestigt ist, wobei diese Schraubenfeder an dieser Stoppvorrichtung und an besagter molaren Röhre angrenzt.

4. Eine orthodontische Vorrichtung nach Anspruch 1 oder Anspruch 2, wobei besagte Federvorrichtung eine Schraubenfeder (12) umfasst, und ferner eine Befestigung (11) einschließt, die an besagtem bogenförmigen Draht befestigt ist, wobei diese Schraubenfeder angeordnet ist, um eine Kraft zwischen dieser Befestigung und einem Zahn des Patienten auszuüben.

5. Eine orthodontische Vorrichtung nach Anspruch 1 oder Anspruch 2, wobei diese Federvorrichtung eine elastische Verlängerung über besagten bukkalen Bogen zur Ausübung von Kräften auf die Zähne besitzt.

6. Eine orthodontische Vorrichtung nach einem der Ansprüche 1 bis 5, wobei das Verbindungsglied eine Steckvorrichtung zur Aufnahme von besagter Knochen-Verankerung besitzt, der regulierbare Verbindungsdraht (20, 15') über seinem ersten Ende an besagter Steckvorrichtung befestigt ist und davon absteht und eine zweite Steckvorrichtung an dem zweiten Ende des regulierbaren Verbindungsdrahtes befestigt ist, zur Aufnahme des bogenförmigen Drahtes (1').
